Europäisches Patentamt

European Patent Office

Office européen des brevets

(19)

(11) Publication number: 0 398 667

A1

(12) EUROPEAN PATENT APPLICATION

(21) Application number: 90305251.2

(22) Date of filing: 16.05.90

(51) Int. Cl.⁵: A22C 29/04, A23L 1/33

(30) Priority: 16.05.89 IE 1573/89

(43) Date of publication of application:
22.11.90 Bulletin 90/47

(84) Designated Contracting States:
AT BE CH DE DK ES FR GB GR IT LI LU NL SE

(71) Applicant: LETT RESEARCH AND
DEVELOPMENT LIMITED
Batt Street
County Wexford(IE)

(72) Inventor: Lett, James
St. Anthonys
Forthmountain, County Wexford(IE)
Inventor: Lett, Desmond
Beg Erin
Newtown, County Wexford(IE)
Inventor: Lett, Richard
Mulgannon
County Wexford(IE)

(74) Representative: Harrison, David Christopher
et al
MEWBURN ELLIS 2 Cursitor Street
London EC4A 1BQ(GB)

(54) Seafood processing.

(57) Live raw mussels which have been harvested from the sea are first placed in purification tanks for between 48 and 72 hours. The purified mussels are washed and debearded and then placed in an open-topped wire basket. A weighted plate 3 is placed on top of the mussels and the basket 1 is placed in a steam cooker where the mussels are steam cooked under pressure. When the mussels are cooked they are removed from the cooker and immediately quick frozen. The frozen mussels are then placed in a polythene bag which is sealed and vacuum packed.

Fig. 2

## SEAFOOD PROCESSING

The invention relates to a method of processing bivalve seafood and in particular mussels.

According to the invention there is provided a method of processing bivalve seafood such as mussels comprising the steps of:
placing washed and debearded bivalves in a container,
applying a weight to the container,
cooking the bivalves in a pressure steam cooker, the weighted lid maintaining the bivalves substantially closed during cooking,
freezing the cooked bivalves, and subsequently packaging the frozen bivalves.

In a preferred embodiment of the invention the container is an open mesh basket. Most preferably the container is an open-topped wire basket.

In a preferred embodiment of the invention the weighted lid is placed on top of the bivalves in the basket.

In a preferred embodiment of the invention the core temperature of the bivalves is maintained at an average temperature of between 130 and 140°C, most preferably approximately 134°C.

In a particularly preferred embodiment of the invention the bivalves are cooked for a period of between 80 and 100 seconds, preferably approximately 90 seconds, at a temperature in the range of from 140 to 145°C, most preferably approximately 143°C.

In a preferred embodiment of the invention vapours and juices from the cooking process are condensed and the cooked bivalves are dipped in the bivalve juice prior to freezing.

Preferably, the cooked bivalves are quick frozen at a temperature of approximately -30°C.

In a preferred embodiment of the invention the frozen bivalves are packaged by placing them in a polythene bag and then into a polyethylene vacuum bag which is sealed and vacuum packed.

The invention also provides packaged bivalve seafood, particularly mussels, whenever processed by a method according to the invention.

The invention will be more clearly understood from the following description thereof given by way of example only with reference to the accompanying drawings in which:

Fig. 1 is an exploded perspective view of a basket used in the processing of the bivalves, and

Fig. 2 is a side view of the cooking basket with the bivalves in position.

Live and raw mussels which have been harvested from the sea are first placed in purification tanks for between forty-eight to seventy-two hours. The purified mussels are then transferred from the purification tanks and washed and debearded.

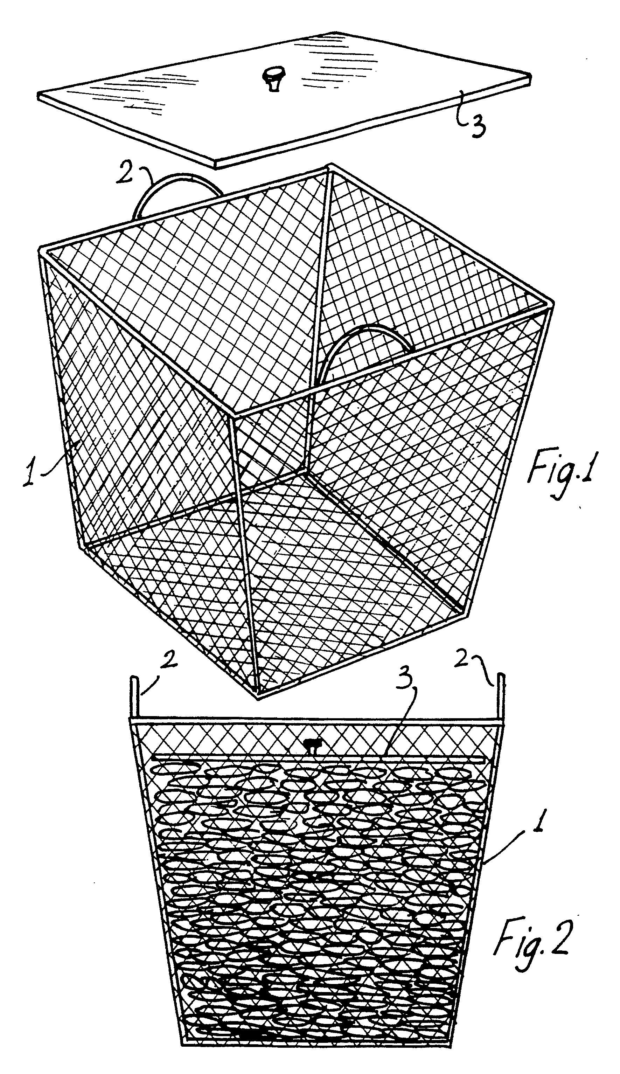

The pre-treated mussels are then placed in an open-topped wire basket 1 and a weighted plate 3 is placed on top of the mussels in the basket as illustrated in Fig. 2.

The wire basket 1 is placed in a pressure steam cooker and the mussels are steam cooked under pressure, the weight of the lid 3 maintaining the bivalves substantially closed during cooking. Any vapours and juices which may be cooked out of the mussels during the cooking process is recondensed into a liquid form.

When the mussels are cooked they are removed from the steam cooker and cooled in mussel juice and immediately quick frozen to a temperature of approximately -30°C. The frozen mussels are placed in a polythene bag and then into a polyethylene vacuum bag which is sealed and vacuum packed. The packaged mussels are then placed in cartons and held in cold storage at a temperature of approximately -30°C.

### Example

Typically a steam pressure cooker retort is loaded with four baskets of raw live mussels, each containing 23 kilograms total net weight of mussels. The pressure steam cooker is first vented of all air for a period of about 10 seconds at a steam pressure of 28 PSI at 133°C. The air vent is then closed and the temperature in the retort is raised over a period of approximately 5 seconds to 143°C. The mussels are then cooked at a temperature of 143°C for approximately 90 seconds and after cooking the retort is vented and the baskets 1 containing the mussels are removed, dipped in mussel juice, quick frozen and vacuum packed as described above.

The core temperature of the mussels during the cooking process is maintained at an average of approximately 134°C.

The process provides flexibility in production and low production costs due to the high volume of throughput. Because the mussels are cooked and frozen prior to vacuum packing, the mussels when reconstituted generally have superior taste.

The freezing time when the mussels are frozen individually as in the present invention is approximately 6 to 7 minutes in a carbon dioxide freezer. This quick freezing method ensures that all juices are held within the mussel shell and that toughness does not occur.

Preferably the bag in which the mussels are placed after freezing is not heat shrinkable ensuring a more satisfactory and marketable package of frozen mussels.

The process provides packaged mussels which are free from bacteria and virus and have a long shelf life, typically approximately 18 months when stored at -18°C or below.

Many variations on the specific embodiment of the invention will be readily apparent. For example, while the invention has been specifically described with reference to the processing of mussels, it is envisaged that it may also be used for processing other bivalve seafood.

These and other variations and modifications on the invention will be readily apparent and accordingly the invention is not limited to the embodiments hereinbefore described which may be varied in detail.

## Claims

1. A method of processing bivalve seafood such as mussels comprising the steps of:
placing washed and debearded bivalves in a container (1),
applying a weight (3) to the container (1),
cooking the bivalves in a pressure steam cooker, the weighted lid (3) maintaining the bivalves substantially closed during cooking,
freezing the cooked bivalves, and subsequently packaging the frozen bivalves.

2. A method as claimed in claim 1 wherein the container is an open mesh basket (1).

3. A method as claimed in claim 2 wherein the container is an open-topped wire basket (1).

4. A method as claimed in any preceding claim wherein a weighted lid (3) is placed on top of the bivalves in the basket (1).

5. A method as claimed in any preceding claim wherein the core temperature of the bivalves is maintained at an average temperature of between 130 and 140°C, preferably approximately 134°C.

6. A method as claimed in any preceding claim wherein the bivalves are cooked for a period of between 80 and 100 seconds, preferably approximately 90 seconds.

7. A method as claimed in any preceding claim wherein the bivalves cooked at a temperature in the range of from 140 to 145°C, preferably approximately 143°C.

8. A method as claimed in any preceding claim wherein the vapours and juices from the cooking process are condensed and the cooked bivalves are dipped in the bivalve juice prior to freezing.

9. A method as claimed in any preceding claim wherein the cooked bivalves are quick frozen at a temperature of approximately -30°C.

10. A method as claimed in any preceding claim wherein the frozen bivalves are packaged by placing them in a polythene bag and then into a polyethylene vacuum bag which is sealed and vacuum packed.

11. Packaged bivalve seafood, particularly mussels, whenever processed by a method as claimed in any preceding claim.

Fig.1

Fig.2

## DOCUMENTS CONSIDERED TO BE RELEVANT

EP 90305251.2

| Category | Citation of document with indication, where appropriate, of relevant passages | Relevant to claim | CLASSIFICATION OF THE APPLICATION (Int Cl⁵) |
|---|---|---|---|
| P,X | BE - A7 - 1 001 206 (LETT) <br> * Totality * <br> -- | 1-11 | A 22 C 29/04 <br> A 23 L 1/33 |
| X | EP - A1 - 0 094 362 (CARLSSON) <br> * Claims * <br> -- | 1-11 | |
| A | FR - A - 2 080 278 (DEY) <br> * Claim * <br> -- | 1 | |
| A | US - A - 3 985 890 (BROWN) <br> * Claim * <br> ---- | 1 | |

TECHNICAL FIELDS
SEARCHED (Int Cl⁵)

A 22 C 29/00
A 23 L 1/00

The present search report has been drawn up for all claims

| Place of search | Date of completion of the search | Examiner |
|---|---|---|
| VIENNA | 16-08-1990 | HAMMER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82